# EUROPEAN PATENT APPLICATION

(11) **EP 4 802 958 A1**
(43) Date of publication of application: **09.09.2026**
(21) Application number: 24885432.5
(22) Date of filing: 15.10.2024
(51) Int. Cl.: A47C 7/54, A47C 1/026, A47C 7/38, F16C 11/10

(54) **IMAGE PROCESSING DEVICE**

(30) Priority: 30.10.2023 JP 2023185414; 31.10.2023 JP 2023186757
(71) Applicant: Koyo Engineering Co., Ltd., Sakai-ku Sakai-shi, Osaka 590-0006 (JP)
(72) Inventor: MORIMOTO Kanako, Osaka-Shi, Osaka 540-8585 (JP); TAKI Kosuke, Osaka-Shi, Osaka 540-8585 (JP); DU Zhouning, Osaka-Shi, Osaka 540-8585 (JP)
(74) Representative: Franke, Dirk
(86) International application number: PCT/JP2024/036694
(87) International publication number: WO 2025/094658

(57) **Abstract**

The present invention provides an angle adjuster having a first member and a second member that performs pivoting rotation relative to the first member and is locked at a predetermined angle. The present angle adjuster includes: a pair of facing plate parts that is provided on one end side of the first member, respectively has circular support openings extending in a thickness direction, and faces each other with a gap interposed in the thickness direction; a gear part provided in the gap sandwiched between the pair of facing plate parts, the gear part being a flat plate disk body having, at a rotation center, a through hole provided with threaded grooves extending on an inner wall thereof in the thickness direction and a tooth surface provided on an outer circumferential edge portion thereof; and a shaft member as a cylindrical member extending in the thickness direction, the cylindrical member rotating in cooperation with the pivoting rotation of the second member and having threads on an outer surface thereof that fit with the threaded grooves on the inner wall of the through hole of the gear part when being inserted into the through hole of the gear part, the shaft member having a shape allowing sliding rotation by the threads abutting against inner walls of the circular support openings of the pair of facing plate parts when being inserted into the circular support openings of the pair of facing plate parts and both sides of the cylindrical member being borne by the circular support openings.

## Description

### Technical Field

The present invention provides an angle adjusting fitting that can easily restore a mutually locked state of a first member and a second member at any position on the way of free pivoting from an unlocked position and can keep the posture by adjusting the angle from a desired intermediate position, and further provides a configuration that enables coupling with easy and precise positioning in the above angle adjuster in assembly, and simultaneously enables maintaining sufficient strength after assembly in spite of significant reduction in the entire thickness and preventing entry of a foreign matter.

### Background Art

As sofas, there are types in which so-called rest portions such as headrests and armrests of the sofa are adjusted to angles desired by a user to enable reclining, and the inventor of the present invention has provided various types of angle adjusting fittings as jigs for adjustment to a desired angle (See Patent Literatures 1 to 3). The angle adjusting fittings generally have structure in which pivoting in one direction of the rest portion is regulated by the angle adjusting fitting to keep the posture at a desired inclination angle, and pivoting in the opposite direction of the rest portion is performed with a click sound.

Specifically, in the case of the conventional angle adjusters, for example, the angle adjuster of Patent Literature 2 has structure in which a second member 2 that pivots relative to a first member 1 and is locked at a desired angle has a pair of "facing parts 13" respectively having circular support holes 21 at the front end of the first member 1, a "gear part 4" that is allowed to perform axial rotation by both ends being inserted into the circular support holes 21 between the pair of facing parts 13, and a "shaft part 20" that rotates axially in cooperation with the second member 2, and the shaft part 20 is inserted to fit into a through hole 23 of the gear part 4, and the shaft part 20 and the gear part 4 are rotated axially in cooperation with each other to cause the second member 2 to perform pivoting rotation relative to the first member 1. In addition, as angle adjusters provided in recent years, there has been also provided an angle adjuster having structure in which a through hole provided with threaded grooves is provided in the second member, a "shaft part" as a separate columnar component to be inserted into and fitted with the through hole is provided, and the "shaft part" pivots in cooperation with the second member.

In such structure, regarding the conventional "shaft part", in the case of the angle adjuster as in Patent Literature 2, in order to allow insertion into and fitting with a through hole of a "gear part" that is a polygonal hole, the "gear part" to be fitted therewith has an outer surface of a polygonal columnar outer shape. Thus in the case of the angle adjuster provided with the above separate columnar "shaft part", in order to allow insertion into the through hole of the "gear part" and firm fitting with threaded grooves on the inner wall of the through hole, the outer surface of the "shaft part" has a columnar outer shape having threads such as serrated grooves that fit with the threaded grooves on the inner wall of the "gear part". Such conventional structure has focused only on causing the "shaft part" to be inserted to firmly fit into the "gear part" to axially rotate the "shaft part" and the "gear part" integrally with each other.

In addition, in the "gear part" in the conventional angle adjusters, as in, for example, Patent Literature 2 above, "protrusions (circular low protruding portions 24 that can be inserted into the circular support holes 21)" are provided on both sides, respectively, of the "gear part 4", and "receiving holes (circular support holes 21)" are provided on the inner sides of the "facing plates 13", respectively, into which the "protrusions 24" on both sides can be inserted to allow pivotal rotation. Note that the "receiving hole 21" may have a shape of bearing and receiving the "protrusion 24" other than the through hole shape as long as being a "receiving portion" that receives the "protrusion 24" and allows pivotal rotation.

In the case of other angle adjusters having the conventional floating wedge member, for example, in the angle adjusters of Patent Literatures 1 to 3, "window portion" wedge windows that receive the "floating wedge member" are respectively provided in a pair of "facing plate parts", and, rivets are respectively inserted into two to three through holes provided in such a positional relation that, with a gear part engaging with the "floating wedge member" being sandwiched between the "facing plate parts", the through holes are viewable to the "facing plate parts" and a "base member (for example, a first arm plate (mounting part 17 of the present invention described later))" of the first member with each other, and the rivets are crimped to complete joining.

Furthermore, in the "floating wedge member", both sides in the thickness direction of the "abutting portion" thereof are respectively supported by edge portions of the above "window portions" of the "facing plate parts", and a "biasing spring member" for pushing the "abutting portion" of the "floating wedge member" is provided at the open end portion of the first member, serving as a base member, to bias the "abutting portion" of the "floating wedge member".

### Citation List

### Patent Literature

Patent Literature 1: Japanese Patent No. 4418519
Patent Literature 2: Japanese Patent No. 5611416
Patent Literature 3: Japanese Patent Laid-Open No. 2019-143670

### Summary of Invention

### Technical Problem

However, in the case of the conventional angle adjusters as described above, it is essential for allowing the integral rotation of the "shaft part" and the "gear part" to have a shape in which the polygonal columnar outer shape and threads on an outer surface such as serrated portions of the "shaft part", and the polygonal hole of the through hole and the threaded grooves on the inner wall of the "gear part" fit with each other. Furthermore, it is essential for allowing the pivotal rotation of the "gear part" and the "facing plates" that the "protrusions" on both sides of the "gear part" are respectively borne by the "receiving holes (or receiving portions)" of the "facing plates". Therefore, the entire thickness has been increased by the projecting lengths of the "protrusions" on both sides of the "gear part" (only by the length in the thickness direction).

In addition, since it is essential to provide "receiving holes (or receiving portions)" for bearing in the "protrusions" on both sides of the "gear part" and the "facing plates", manufacturing by an easy process such as press working is impossible, which limits the reduction of processing costs and processing time.

In addition, as in the conventional angle adjusters described above, in a case where joining is completed simply by inserting a rivet into the through holes respectively provided in "facing plate parts" paired on both sides and the "base member (mounting part)" therebetween and crimping the rivet, a large moment acts in the vicinity of the through holes into which the rivet is inserted during pivoting rotation, and therefore it is necessary to increase the strength around the through holes. Therefore, reducing thickness of the "facing plate parts" and the "base member (mounting part)" has been impossible, which limits reducing size and weight of the angle adjuster.

In addition, in the case of the conventional angle adjusters, manual work of crimping the above rivet with manually positioning each component is required in the assembly process, which takes a large amount of assembly time and imposes a large human cost. For example, in a temporary assembly stage before rivet-joining the "facing plate parts" and the "mounting part", the "gear part" and the "biasing spring" that engage with the "floating wedge member" easily fall, which requires effort and unnecessary time for positioning in the temporary assembly stage.

In addition, in the case of the conventional angle adjusters, the "window portions" for the "floating wedge member" are formed only in the pair of "facing plate parts", respectively, and the "floating wedge member" is supported only by both sides in the thickness direction. Therefore, also in this point, the "facing plates" are required to have sufficient thickness to receive and support the "floating wedge member". Even if the thickness of other members such as the "gear part" is reduced, there is a limit to reducing the thickness of the pair of "facing plate parts" for securing the thickness of the "window portions" for the "floating wedge member", which makes it difficult to reduce thickness as a whole.

Furthermore, it is also conceivable to reduce the thickness of the "facing plate parts" by ensuring a part of the edge portions of the "window portions" by the "base member (mounting part)" or the like of the first member sandwiched between the "facing plate parts". However, the "window portions" are required to be precisely formed so as to have the shape, size, and position matching those of the "floating wedge member". In a case where the "facing plate parts" and the "base member (mounting part)" are joined to each other simply by a rivet as conventionally, it is impossible, as described above, to perform precise positioning merely through assembly. Therefore, it is impossible to adopt this conceivable option immediately.

The present invention has been made in view of the above problems, and an object of a first present invention is to provide an angle adjuster that can be manufactured by an easy process and can significantly reduce processing cost and processing time while being significantly reduced in thickness.

In addition, an object of a second present invention is to provide an angle adjuster that enables precise positioning in assembly of the "facing plate parts" and the "base member (mounting part)" by an easy process so as to be coupled to each other, and that can simultaneously maintain sufficient strength in spite of significant reduction in entire thickness.

### Solution to Problem

The first present invention is an angle adjuster having a first member and a second member that performs pivoting rotation relative to the first member and is locked at a predetermined angle, the angle adjuster including:
a pair of facing plate parts that is provided on one end side of the first member, respectively has circular support openings extending in a thickness direction, and faces each other with a gap interposed in the thickness direction;
a gear part provided in the gap sandwiched between the pair of facing plate parts, the gear part being a flat plate disk body having, at a rotation center, a through hole provided with threaded grooves extending on an inner wall thereof in the thickness direction and a tooth surface provided on an outer circumferential edge portion thereof;
a shaft member as a cylindrical member extending in the thickness direction, the cylindrical member rotating in cooperation with the pivoting rotation of the second member and having threads on an outer surface thereof that fit with the threaded grooves on the inner wall of the through hole of the gear part when being inserted into the through hole of the gear part, the shaft member having a shape allowing sliding rotation by the threads abutting against inner walls of the circular support openings of the pair of facing plate parts when being inserted into the circular support openings of the pair of facing plate parts and both sides of the cylindrical member being borne by the circular support openings; and
a floating wedge member that has a tooth surface formed on one surface side and being capable of engaging with the tooth surface of the outer circumferential edge portion of the gear part and an abutting surface formed on an opposite surface side and abutting against a wedge surface formed on a side of the first member.

The angle adjuster of the first present invention is the same as the conventional angle adjusters in that the threads on the outer surface of the "shaft member" serving as a pivoting rotation axis of the second member firmly fit, together with the "floating wedge member", with the threaded grooves on the inner wall of the "gear part" that adjusts the angle to the first member. However, the angle adjuster of the first present invention is configured so that the threads of the "shaft member" do not fit with the inner walls of the circular support openings of the facing plate parts at the front end of the first member and the "shaft member" is allowed to perform sliding rotation while abutting against the inner walls of the circular support openings.

That is, in the conventional angle adjusters, the "shaft member" has a role of integrally rotating with the "gear part" and the "protrusions" on both sides of the "gear part" has a role as a bearing that performs sliding rotation with the "facing plate parts". In contrast, the present angle adjuster adopts a configuration in which the "shaft member" plays both the role of integrally rotating with the "gear part" and the role of performing sliding rotation with the "facing plate parts". As a result of adopting this configuration, the present angle adjuster eliminates a need of providing the "protrusions" on both sides of the "gear part" and can be shaped into a flat plate. Therefore, the thickness as the entire angle adjuster can be significantly reduced.

In particular, having structure in which the "protrusions" are provided on both sides of the "gear part", the conventional angle adjusters cannot be manufactured by simple press working and required to be manufactured by a sintering process in which a pressurized powder body obtained by compression molding of powder is heated at a temperature of the melting point or less and densified, which inevitably makes mechanical properties such as strength inferior. Therefore, it has been required for the conventional angle adjusters to secure thickness and size of a certain degree in order to obtain a "gear part" having high strength. In contrast, in the present angle adjuster, the "gear part" can be a flat-plate disk body and therefore can be shaped from a pure steel material by press working, and can be significantly improved in mechanical properties such as strength. As a result, the "gear part" and thus the entire angle adjuster can be significantly reduced in size and thickness by a simple process, which is advantageous.

Furthermore, since there is no "protrusions" and the part for taking a role of angle adjustment can be manufactured as a flat-plate disc-shaped body, a balance of force during rotation is also excellent, which is advantageous.

In the present angle adjuster, it is preferable that the threads provided on the outer surface of the shaft member individually include an abutting portion and a root portion, the abutting portion forming a circular arc cross section allowing sliding rotation by a vicinity of an apex in a radial cross section of the shaft member abutting against the respective inner walls of the circular support openings of the pair of facing plate parts, the root portion being continuous with the abutting portion and fitting with the threaded grooves on the inner wall of the through hole of the gear part.

In the preferred example of the present angle adjuster, the apexes of the threads on the outer surface of the "shaft member" individually have a circular arc cross section (abutting portion) with a gentle slope so as to allow sliding rotation with the "facing plate parts", and the roots (root portions) of the threads individually have steep slopes that firmly fit with the threaded groove of the through hole of the "gear part". In this manner, in one thread, two thread configurations having different slope angles are made continuous with each other. As a result, a specific configuration that can achieve the function of the present angle adjuster that plays both the above-described role of the "shaft member" rotating integrally with the "gear part" and role of performing sliding rotation with the "facing plate parts" is provided, which is advantageous.

In addition, it is preferable that, each of the circular support openings of the pair of facing plate parts is a through hole provided in the thickness direction, the through hole having an inner diameter that is substantially the same as an outer diameter of the shaft member and having an inner wall formed as a smooth surface.

In the above preferred example of the present angle adjuster, the circular support opening of the "facing plate part" is formed as a simple through hole, and the inner wall thereof is formed as a smooth surface. In the case of this configuration, from a flat plate of a general-purpose ferrous material or the like, a through hole having substantially the same diameter as the outer diameter of the "shaft member" can be manufactured simply by press boring. This configuration is advantageous in capable of providing an angle adjuster that can be manufactured easily, has low residual stress by processing, and has sufficient precision and strength even with an inexpensive ferrous material.

Furthermore, it is preferable that the shaft member is a member separate from the second member,
the second member is provided with a through hole centered on a pivoting rotation axis of the second member, and the through hole is provided with threaded grooves on an inner wall thereof, the threaded grooves fitting with the root portions of the threads provided on the outer surface of the shaft member when the shaft member is inserted.

In the above preferred example of the present angle adjuster, the "shaft member" is a separate and independent component from the second member, and the threads (especially the "root portions") on the outer surface of the "shaft member" are configured to be capable of fitting firmly with the threaded grooves in the through hole provided in the second member. With this configuration, all components have a simple shape and are easily stored and managed. Furthermore, the second member, the "facing plate parts" of the first member, and the "gear part" all have the same inner diameter as the outer diameter of the "shaft member", are disposed coaxially with the "shaft member", and are sequentially inserted to assemble the present angle adjuster, which is advantageous in both management and production.

In addition, the second present invention is an angle adjuster having a first member and a second member that performs pivoting rotation relative to the first member and is locked at a predetermined angle, wherein
the first member is formed of
   a pair of facing plate parts that is provided on one end side of the first member, respectively has circular support openings in a thickness direction, and faces each other with a gap interposed in the thickness direction, and
   a flat plate-shaped mounting part coupled between the pair of facing plate parts on an opposite end side thereof,
the first member further includes:
   a gear part provided in the gap sandwiched between the pair of facing plate parts, the gear part being a disk body having, at a rotation center, a through hole provided with threaded grooves in the thickness direction on an inner wall thereof and a tooth surface provided on an outer circumferential edge portion thereof;
   a floating wedge member that has a tooth surface formed on one surface side and being capable of engaging with the tooth surface of the outer circumferential edge portion of the gear part and an abutting surface formed on an opposite surface side and abutting against a wedge surface formed on a side of the first member; and
   a cylindrical shaft member extending in the thickness direction, the cylindrical shaft member rotating in cooperation with the pivoting rotation of the second member and having, on an outer surface thereof, threads that fit with the threaded grooves on the inner wall of the through hole of the gear part when being inserted into the through hole of the gear part,
the pair of facing plate parts has first wedge support surfaces, respectively, that support both sides in the thickness direction of the abutting surface of the floating wedge member, and has window portions, respectively, that form, between the first wedge support surfaces and the gear part, a wedge-shaped space as a movement space for the floating wedge member,
the pair of facing plate parts individually has two or more projections and a through hole, the two or more projections being separated in the width direction toward the opposite end side compared with the individual window portion and projecting inward in the thickness direction, the through hole being provided further toward the opposite end side, and
the mounting part has through holes respectively receiving the two or more projections provided in each of the pair of facing plate parts, and a through hole into which a fastener is inserted integrally with the respective through holes of the pair of facing plate parts.

In the angle adjuster of the second present invention, two or more projections having, for example, a circular shape projecting inward (See, for example, circular projections 53 in the embodiment) are provided in the width direction in each of the "facing plate parts", and in assembly, the two or more projections are inserted into and received by the through holes of the "mounting part" provided at the positions corresponding to these two or more projections (See, for example, through holes 52 in the embodiment), and the "facing plate parts" are temporarily assembled (temporarily positioned) to the "mounting part". Thereafter, the through holes on the opposite end side (rear end side) relative to the two or more projections (See, for example, through holes 54 in the embodiment) and the through hole of the "mounting part" (See, for example, through hole 55 in the embodiment) are rivet-joined to each other to finally couple the "facing plate parts" to the "mounting part". In other words, when the "facing plate parts" are assembled to the "mounting part", the projections of the "facing plate parts", which correspond to so-called dowels, are inserted into the through hole of the "mounting part" and positioned thereto, and in the positioned state, the rivet is crimped on the opposite end side (rear end side) compared with the dowels to complete joining.

When this configuration is adopted, the load is supported by dowels (two or more projections) on the front end side (the "window portion" side) compared with the rivet-joined portion where a large moment acts during pivoting rotation to distribute the action of the moment between the rivet-joined portion and the dowel-joined portion, which can significantly increase strength. As a result, the "facing plate parts" and the "mounting part" can be reduced in thickness and size, which is advantageous.

In addition, in the present angle adjuster, it is possible to temporarily assemble (position) one of the "facing plate parts" to the "mounting part" by the projections as dowels in the assembly process and then assemble components such as the gear part and the floating wedge member. Therefore, it is possible to perform the assembly process easily and promptly without errors from the temporary assembly stage, such as avoiding components falling in assembly.

In addition, since the components are precisely positioned in the temporary assembly before rivet-joining with the dowels (two projections) being firmly fitted with the through holes of the "mounting part", it suffices that the rivet-joining maintains strength of a degree to avoid disassembly during use, and rivet-joining at least one portion is sufficient. Therefore, it is possible to secure strength while reducing processing time and burden compared to the conventional assembly process solely relying on manual crimping work. Especially, as described later, in the case of the present preferred angle adjuster having a configuration in which the "abutting surface" of the floating wedge member is supported not only by the edge portions of the wedge "window portions" but also by the "cutout portion", it is possible to precisely position the "facing plate parts" and the "mounting part" to each other from the temporary assembly stage, which is advantageous.

Specifically, in the angle adjuster of the second present invention,
the projections provided on the opposite end side relative to the window portion of each of the pair of facing plate parts are aligned with each other in the width direction, the projections provided being two, and the through holes of the mounting part respectively receiving the projections are aligned with each other in the width direction, the through holes of the mounting part provided being two, and
the through hole of each of the pair of facing plate parts provided on the opposite end side compared with the projections is one, and the through hole of the mounting part into which the fastener is inserted integrally with the respective through holes of the pair of facing plate parts is one, and a leading end of the fastener is crimped after being inserted to join the pair of facing plate parts and the mounting part to each other.

In addition, in the present preferred angle adjuster, each of the pair of facing plate parts has a frame portion that erects inward in the thickness direction along a peripheral edge portion on one end side of the facing plate part, and when the pair of facing plate parts is coupled to the mounting part with interposing the gear part, the frame portions face each other in the thickness direction to abut or be adjacent to each other.

In the case of the above preferred present angle adjuster, a configuration is adopted in which the respective edge portions of the pair of "facing plate parts" are enclosed by the "frame portions (See, for example, first frame portions 25 in the embodiment) ", respectively, so as to make the respective "frame portions" abut or face at a close distance to each other in the thickness direction to sandwich the "mounting part". As a result, surface rigidity is secured in the "frame portions" to increase strength (especially, strength in a torsion direction) of the "facing plate parts" and the "mounting part", and reduction in thickness and size of the "facing plate parts" and the "mounting part" is further achieved. As a result of actual strength tests, it has been found that, when strong load and moment act on the dowel (projection)-joined portion and the rivet-joined portion, the load acts intensively on the "frame portions", especially in the vicinity of the boundary on the rear end side between the "frame portions" (for example, in the vicinity of the boundary between the first frame portion 25 and the second frame portion 26 in the embodiment). It has been verified that the existence of the "frame portions" is one of the important conditions when the "mounting part" is formed as a thinner plate.

Furthermore, when the "frame portions" abut or are adjacent to each other in the thickness direction to isolate the inside of the "facing plate parts" such as the "mounting part", the "gear part", the "floating wedge member," and the like from the outside, it becomes difficult that a foreign matter enters inside from the outside to enable preventing malfunction of the "gear part" and the "floating wedge member" that perform delicate operations, which is also advantageous.

In addition, it is preferable that the mounting part of the first member is provided with a cutout portion on the one end side and
the cutout portion has a second wedge support surface supporting a center side in the thickness direction of the abutting surface of the floating wedge member and being continuous with the first wedge support surface.

The present angle adjuster adopts a configuration in which the "cutout portion" is provided in the "mounting part" as a base member (arm) of the first member coupled to the pair of "facing plate parts", and the "cutout portion" is provided with the "second wedge support surface (See, for example, a second wedge surface 22 in the embodiment)" to reinforce support of the "abutting surface" of the floating wedge member in cooperation with the "first wedge support surfaces (See, for example, first wedge surfaces 8 in the embodiment)" of the window portions of the pair of "facing plate parts". With this configuration, simply by providing the "cutout portion" in the "mounting part" by an easy processing process such as press working, the "abutting surface" of the floating wedge member can be sufficiently supported even if the window portions of the pair of "facing plate parts" are reduced in thickness.

In addition, it is preferable that the cutout portion is formed of a floating wedge support portion and a spring housing portion, the floating wedge support portion having the second wedge support surface supporting the center side in the thickness direction of the abutting surface of the floating wedge member, the spring housing portion being cut out further toward the opposite end side compared with the floating wedge support portion and housing a spring member that biases the opposite surface side of the floating wedge member.

In the case of the above example of the angle adjuster, the "floating wedge support portion (See, for example, a floating wedge support portion 21b in the embodiment)" that supports the "abutting surface" of the floating wedge member that has been described above is provided in the "cutout portion" provided in the "mounting part", and the "floating wedge support portion" is further cut out to provide the "spring housing portion (See, for example, a spring housing portion 21a in the embodiment)" that houses the spring member. Therefore, simply performing single press working on the "mounting part" enables providing the "floating wedge support portion" that can reduce the thickness of the window portions of the pair of "facing plate parts" by reinforcing the support of the "abutting surface" of the floating wedge member, and simultaneously enables providing the housing portion for the spring member that takes a role of biasing the "abutting surface".

### Advantageous Effects of Invention

According to the angle adjuster of the first present invention, while achieving significant reduction in thickness, manufacturing by an easy process and significant reduction in processing cost and processing time are possible.

According to the angle adjuster of the second present invention, using the projections (so-called dowels) provided on the opposite end side of the "facing plate parts", the "facing plates parts" are assembled to the "mounting part", and in the assembled state, the rear end side thereof is rivet-joined. Therefore, it is possible to maintain high strength while achieving reduction in thickness and size, and simultaneously make the assembly process easy and fast.

In addition, according to the angle adjuster of the second present invention, the floating wedge member and the spring member that biases the floating wedge member can be sufficiently reinforcingly supported not only by the window portions of the "facing plate parts" but also by the cutout portions of the "mounting part" formed by an easy processing process such as a pressing process or the like, thereby enabling reduction in thickness of the window portions and the "mounting part" while maintaining strength and enabling reduction in thickness as the entire device.

Furthermore, by providing the "frame portions" in the "facing plate parts", respectively, the surface rigidity of the "facing plate parts" is secured and the high strength of the "facing plate parts" and the "mounting part" is enhanced to enable reduction in thickness and size of the "facing plate parts" and the "mounting part". In addition, by the "frame portions" of the "facing plate parts" abutting or being adjacent to each other, a foreign matter from the outside is prevented and malfunction of the "gear part" and therefore the "floating wedge member" can be also prevented.

### Brief Description of Drawings

[Figure 1] Figure 1 shows a disassembled perspective view of an angle adjuster, which is one embodiment of first and second present inventions.
[Figure 2] Figure 2 shows a perspective view showing the appearance of the angle adjuster of Figure 1 after a first member is assembled.
[Figure 3] Figure 3 shows a disassembled perspective view of the first member **1.**
[Figure 4] Figure 4(a) shows a perspective view of a gear part and Figure 4(b) shows a side view of the gear part.
[Figure 5] Figure 5(a) shows a perspective view of a shaft member, Figure 5(b) shows a side view of the shaft member viewed from a front end side, and Figure 5(c) shows a front view viewed in a radial direction of the shaft member.
[Figure 6] Figure 6(a) shows a perspective view of a floating wedge member and Figure 6(b) shows a side view of the floating wedge member.
[Figure 7] Figure 7 shows a top view of the first member in an assembled state.
[Figure 8] Figure 8 shows a side view of member arrangement in a state where one of facing plate parts is detached from the first member in the assembled state shown in Figure **7****.**
[Figure 9] Figure 9 shows an enlarged perspective view in which the floating wedge member and a spring member are detached from the state shown in Figure **8****.**
[Figure 10] Figure 10 shows a perspective view of a sofa, showing a state in which each member is closed before the angle adjuster shown in Figure 1 performs pivoting rotation.
[Figure 11] Figure 11 shows a perspective view of the sofa, showing a state in which each member is opened after the angle adjuster shown in Figure 1 performs pivoting rotation.

### Description of Embodiment

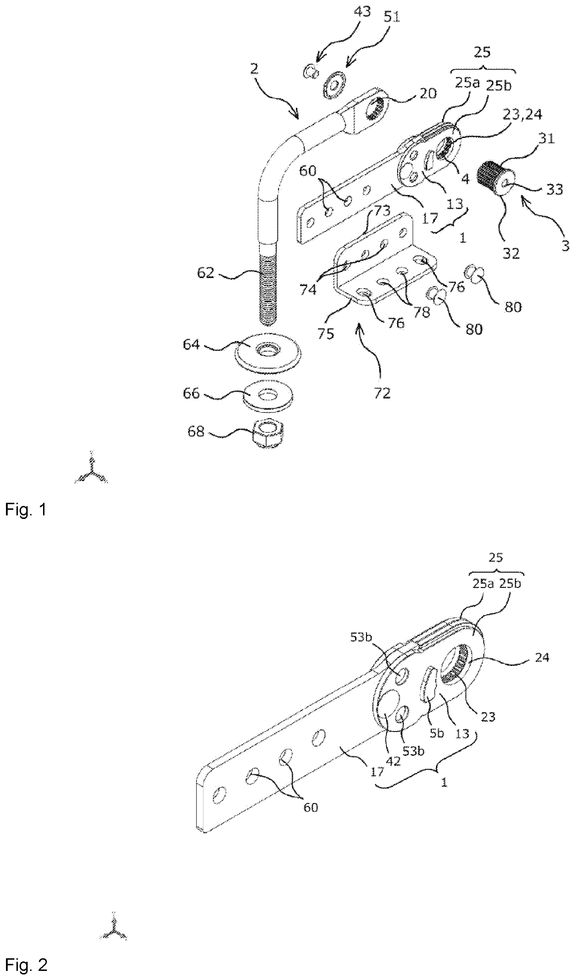

Hereinafter, an angle adjuster 1 of first and second present inventions will be described specifically with reference to Figure 1 to Figure 9.

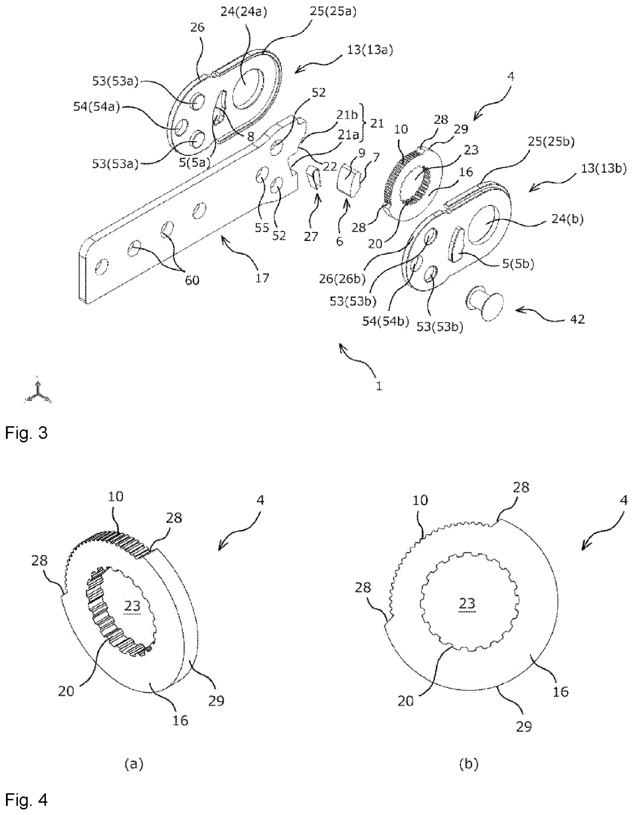

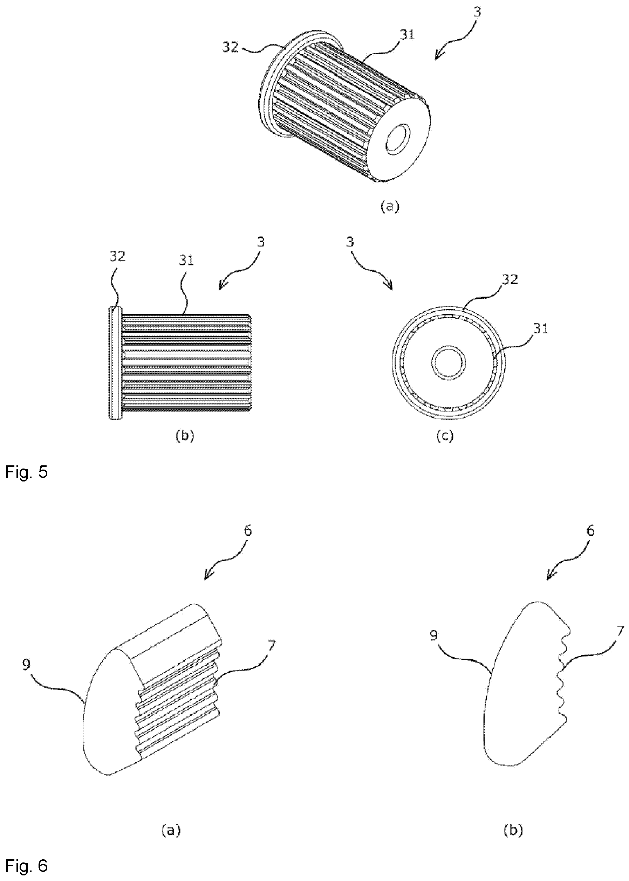

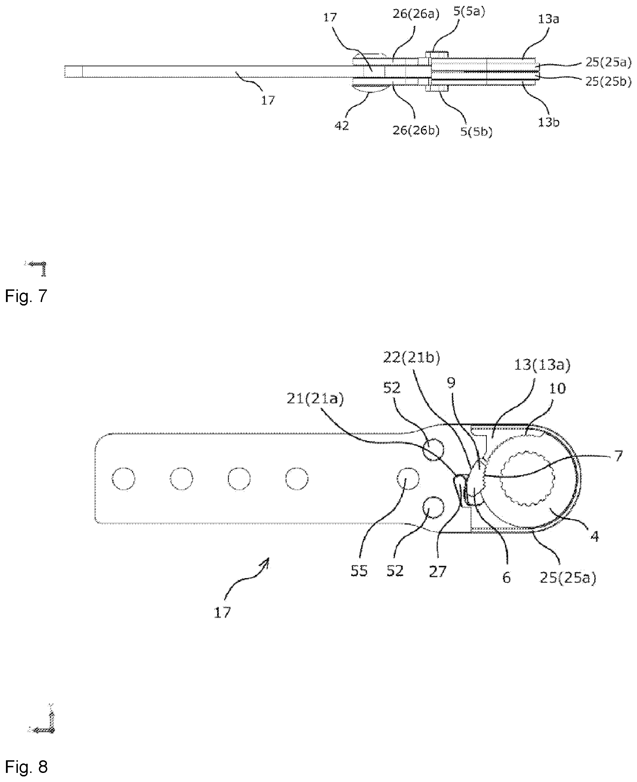

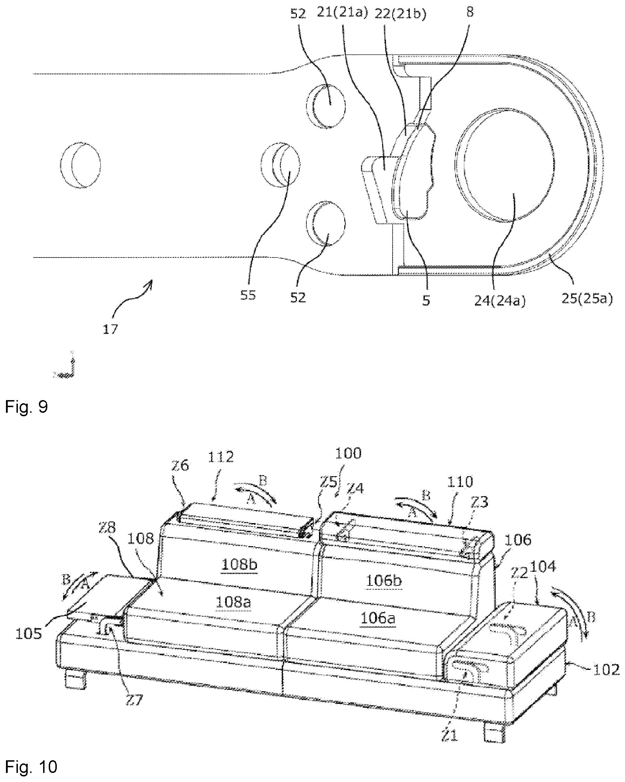

Figure 1 shows a disassembled perspective view of an angle adjuster, which is one embodiment of the present invention, Figure 2 shows a perspective view showing the appearance of a first member 1 of the angle adjuster of Figure 1 after assembly, Figure 3 shows a disassembled perspective view of the first member 1, Figure 4(a) shows a perspective view of a gear part 4, Figure 4(b) shows a side view of the gear part 4 (side view in an X direction of Figure 1), Figure 5(a) shows a perspective view of a shaft member 3, Figure 5(b) shows a side view of the shaft member 3 viewed from a front end side (side view in a -X direction of Figure 1), Figure 5(c) shows a front view viewed in a radial direction of the shaft member 3 (side view in a Y direction of Figure 1), Figure 6(a) shows a perspective view of a floating wedge member 6, Figure 6(b) shows a side view of the floating wedge member 6 (side view in the X direction of Figure 1), Figure 7 shows a top view of the first member 1 in the assembled state (top view in a Z direction of Figure 1), Figure 8 shows a side view of the member arrangement in a state where one facing plate part 13b is detached from the first member 1 in the assembled state shown in Figure 7 (side view in the X direction of Figure 1), and Figure 9 shows an enlarged perspective view in which the floating wedge member 6 and a spring member 27 are detached from the state shown in Figure 8.

The angle adjuster of the first and second present inventions is a mechanism that generally has, as shown in Figure 1 to Figure 9, the first member 1 having, at the front end thereof, circular support openings 24 penetrating along an pivoting rotation axis, a shaft member 3 inserted into the circular support openings 24 of the first member to perform pivotally-coupled rotation, and a second member 2 that integrally rotates in cooperation with the shaft member 3 by the leading end of the shaft member 3 being inserted to fit into a threaded hole 20 penetrating along the pivoting rotation axis, the mechanism making the first member 1 and the second member 2 perform pivoting rotation relative to each other and be locked at a predetermined angle.

The first member 1 includes, as shown in Figure 3 and the like, a pair of facing plate parts 13 (13a, 13b) on the front end side, that is disposed in parallel so as to be spaced apart in a thickness direction and sandwiches and holds the gear part 4 that is a flat disk plate 16, and a flat plate-shaped mounting part 17 on the rear end side, that is coupled to the facing plate parts 13 (13a, 13b). The facing plate parts 13a, 13b respectively have the circular support holes 24a, 24b penetrating therethrough and (wedge-shaped) window portions 5 (5a, 5b) for forming a wedge-shaped space in which the floating wedge member 6 is held. The window portions 5 in this embodiment do not penetrate in the thickness direction, and respectively form recesses that are concaved outward in the thickness direction.

Specifically, the pair of facing plate parts 13 (13a, 13b) respectively has, on the forward end side thereof, the circular support openings 24 (24a, 24b) each having an inner diameter substantially the same as the outer diameter of the shaft member 3 described later and penetrating in the thickness direction, and first frame portions 25 (25a, 25b) respectively erected inward along the edge portions of the facing plate parts 13 so as to surround the circular support openings 24. Regarding the raised height (height in the thickness direction (height in the X direction in Figure 3)) of the first frame portions 25 (25a, 25b), the sum of the respective raised heights of the first frame portions 25a, 25b is larger than the thickness of the gear part 4 described later. When assembly as shown in Figure 7 is performed, the entire gear part 4 is stored inside the first frame portions 25a, 25b, and respective opposing surfaces of the first frame portions 25a, 25b abut against each other.

In addition, the pair of facing plate parts 13 (13a, 13b) respectively has, at the same positions on the rear end side thereof, two inwardly projecting circular projections 53 (53a, 53b) aligned in a width direction (a Y direction in Figure 3) in the rearward relative to the window portions 5 (5a, 5b), and respectively has, at the same positions on the rear end side thereof, through holes 54 (54a, 54b) at an intermediate position in the width direction.

In addition, the pair of facing plate parts 13 (13a, 13b) respectively has, at the same positions on the rear end side thereof, two inwardly projecting circular projections 53 (53a, 53b) aligned in the width direction (the Y direction in Figure 3) in the rearward relative to the window portions 5 (5a, 5b), and respectively has, at the same positions on the rear end side thereof, through holes 54 (54a, 54b) at an intermediate position in the width direction.

The pair of facing plate parts 13 (13a, 13b) respectively has, on the rear end side thereof, second frame portions 26 (26a, 26b) erected inward along the edge portions of the facing plate parts 13 so as to surround the circular projections 53 (53a, 53b) and the through holes 54 (54a, 54b). The raised height (height in the thickness direction (height in the X direction in Figure 3)) of the second frame portions 26 (26a, 26b) is lower than the raised height of the first frame portions 25 (25a, 25b) and is such height that allows abutment to the surface of the mounting part 17 when assembling as shown in Figure 7 is performed and the opposing surfaces of the first frame portions 25a, 25b are abutted against each other.

As described above, the pair of facing plate parts 13 (13a, 13b) includes the gear part 4 in which a disk body (flat disk plate) 16 having a circular through hole 23 is held so as to be able to perform pivoting rotation and coaxial rotation relative to the first member 1 (facing plate parts 13 (13a, 13b)). The gear part 4 has, at the center thereof, the through hole 23 that penetrates along the pivoting rotation axis and is viewable to the circular support openings 24 in the assembled state, and the shaft member 3 is inserted into the circular support openings 24 and the through hole 23.

As shown in Figure 3 and Figure 4, the gear part 4 is a flat disk plate 15 cut out by press working or the like from a general-purpose flat plate material such as a ferrous material. A part of the outer circumferential edge portion of the gear part 4 is provided with gear grooves 10 cut in the thickness direction. The other part of the outer circumferential edge portion of the gear part 4 forms a smooth surface 29 that can slide relative to the inner walls described later of the first frame portions 25 of the facing plate parts 13, and has a diameter that becomes larger, at a stepped portion as a boundary, than that of the outer circumferential edge portion having the gear grooves 10. The inner wall of the through hole 23 at the center of the gear part 4 is provided with threaded grooves 20 in the thickness direction. When the shaft member 3 described later is inserted into the threaded grooves 20, threads 31 on the outer circumferential surface of the shaft member 3 fit with the threaded grooves 20, and the threaded grooves 20 and the threads 31 are positioned in a pivoting rotation direction with respect to each other. As a result, the gear part 4 and the shaft member 3 cooperate with each other to integrally rotate within the first frame portions 25 of the facing plate parts 13.

As shown in Figure 3 and Figure 6, the floating wedge member 6 has a tooth surface 7 formed one end side, that can engage with the gear grooves 10 and an abutting surface 9 formed on the opposite end side, that abuts against a wedge surface 8 formed in the mounting part 17. In addition, the mounting part 17 constituting the rear end side of the first member 1 is provided with a cutout portion 21 on the front end thereof. As shown in Figure 3 and Figure 9 and also in Figure 8, the cutout portion 21 includes a deeply-cut spring housing portion 21a and a shallowly-cut floating wedge support portion 21b.

The floating wedge member 6 is held in the wedge-shaped space formed by the window portions 5 (5a, 5b) of the pair of facing plate parts 13 (13a, 13b), the floating wedge support portion 21b of the cutout portion 21, and the gear part 4. Therefore, in the abutting surface 9 of the floating wedge member 6, both sides in the thickness direction are abut against first wedge surfaces 8 of the window portions 5 (5a, 5b), and the center side is abutted against a second wedge surface 22 of the floating wedge support portion 21b. Thus, the abutting surface 9 is configured to be supported by both the pair of facing plate parts 13 (13a, 13b) and the mounting part 17.

In addition, as shown in Figure 3 and Figure 6, the floating wedge member 6 has 13 to 20 gear teeth formed on the tooth surface 7 on the gear part 4 side. As shown in Figure 3 and Figure 4, for the gear grooves 10 of the gear part 4, 40 or more, preferably 45 to 65 (small-pitched) gear teeth are formed. As a result, the number of angle adjustment stages can be set to 40 or more. The spring member (elastic member) 27 is housed in the spring housing portion 21a of the cutout portion 21 of the mounting part 17, and the abutting surface 9 side (mounting part 17 side) of the floating wedge member 6 is elastically biased by the spring member 27 in the direction of pushing the floating wedge member 6 against the gear part 4.

In addition, the mounting part 17 has two through holes 52 aligned in the width direction (the Y direction in Figure 3) in the rearward of the cutout portion 21, and has a through hole 55 at an intermediate position in the width direction on the further rear end side thereof. These through holes 52 and through hole 55 are in a positional relationship to be viewable to the circular projections 53 (53a, 53b) and the through holes 54 (54a, 54b) of the pair of facing plate parts 13 (13a, 13b), respectively. With the circular projections 53 (53a, 53b) being inserted into and received by the through holes 52, respectively, a rivet 42 is inserted from its leading end in the order of the through hole 54b, the through hole 55, and the through hole 54a, and the leading end is crimped, thereby the pair of facing plate parts 13 (13a, 13b) is joined to the mounting part 17.

Next, the shaft member 3 will be described. As shown in Figure 3 and Figure 5, the shaft member 3 is a cylindrical member having the threads 31 aligned on the outer surface in parallel to the axial direction, and has, on the rear end side thereof, a flange portion 32 having a larger diameter. Regarding the respective threads 31, in the radial cross-sectional view (Figure 5(c)), the vicinity of the apex is formed into a gently-sloped circular-arc shape (abutting portion), and steeply-sloped root portion continuous with the abutting portion is provided. Such shaft member 3 is inserted, as shown in Figure 1, sequentially into the circular support opening 24b, the through hole 23, and the circular support opening 24a of the pair of facing plate parts 13a, 13b with the shaft member 3 being assembled in the state as shown in Figure 2. At this time, of the threads 31 of the shaft member 3, the abutting portions with a gentle arc cross sections in the vicinities of the apexes can slide relative to the smooth surfaces of the inner walls of the circular support openings 24a, 24b of the facing plate parts 13a, 13b on both sides in the thickness direction. The apexes and the root portions of the same threads 31 firmly fit with the threaded grooves 20 of the through hole 23 of the gear part 4, thereby the gear part 4 and the shaft member 3 integrally rotate in cooperation with each other.

As shown in Figure 1, the leading end of the shaft member 3 is inserted into the first member 1 and then inserted into the through hole 20 serving as the pivoting rotation axis of the second member 2. At this time, the threads 31 of the shaft member 3 are firmly fitted with the threaded grooves on the inner wall of the through hole 20, and a rivet 43 is inserted into the through hole 33 along the axis of the shaft member 3 through a washer 51 to fix the shaft member 3 in the axial direction. As a result, angle adjustment can be performed so as to allow pivoting rotation of the second member 2 relative to the first member 1.

Furthermore, in this embodiment, as shown in Figure 1, the second member 2 extends, at a closed position, a predetermined distance from the pivoting rotation center (shaft member 3) in the same direction as the mounting part 17 extends, and then bends in a substantially right-angle direction and extends downward. Threaded grooves 62 are provided at the end portion on the other side to the pivoting rotation center, and the second member 2 is inserted into a coupling hole of a base (for example, a base portion 102) of a sofa 100 described later in Figure 10 to Figure 11 from the front side thereof with interposing a washer 64, and fastened by a bolt 68 on the back side to a base side (for example, the base portion 102) with interposing a washer 66.

In addition, on the opposite end side of the mounting part 17 of the first member 1, a plurality of through holes 60 are disposed so as to be aligned in the longitudinal direction. A bracket 72 includes a coupling plate portion 73 having through holes 74 at respective positions where the through holes 60 of the mounting part 17 are viewable, and a supporting plate portion 75 bent at a substantially right angle to the coupling plate portion 73 and has elliptical through holes 76 disposed on both end sides and through holes 78 disposed between the through holes 76. The through holes 60 of the mounting part 17 and the through holes 74 of the coupling plate portion 73 of the bracket 72 are respectively coupled to each other by bolts and nuts, or the like. In addition, the supporting plate portion 73 of the bracket 72 is coupled to the coupling hole on a pivoting portion side (for example, a right armrest portion 104) as shown in Figure 10 to Figure 11 described later through the elliptical through holes 76 and the through holes 78 with bolts and nuts, or the like. Note that the elliptical through holes 76 are formed into an elliptical shape for allowing play in the width direction at the time of coupling.

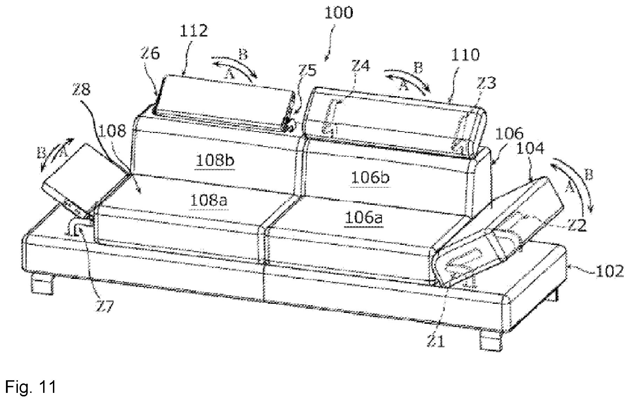

Finally, a case where the angle adjuster as shown in Figure 1 having the bracket 72 and the bent second member 2 is used for a sofa is illustrated. Figures 10 and 11 respectively show perspective views of the sofa 100 in which respective members are coupled by angle adjusters Z1 to Z8 having the above bracket 72 and the second member 2. Figure 10 shows a state in which respective members are closed before the angle adjusters Z1 to Z8 perform pivoting rotation, and Figure 11 shows a state in which respective members are opened after the angle adjusters Z1 to Z8 perform pivoting rotation.

Specifically, first, the sofa 100 has a right chair portion 106 and a left chair portion 108 on which a user sits on the right and the left, respectively, that are placed on the base part 102. The right armrest portion 104 and a left armrest portion 105 are coupled to the right side of the right chair portion 106 and the left side of the left chair portion 108, respectively, by the respective first members 1 of the angle adjusters Z1 and Z2, and Z7 and Z8, and the base portion 102 is coupled by the respective second members 2 (brackets 72) of the angle adjusters Z1 and Z2, and Z7 and Z8. As a result, the right armrest portion 104 and the left armrest portion 105 can pivot as shown in arrows A and B and be positioned at a desired angle.

Furthermore, the right chair portion 106 and the left chair portion 108 respectively include seat portions 106a, 108a supporting the buttocks of the user from below, and backrest portions 106b, 108b supporting the back of the user and bending upward integrally formed with the seat portions 106a, 108a. A right head support portion 110 and a left head support portion 112 supporting the head of the user are coupled to the upper sides of the backrest portions 106b, 108b, respectively, and the coupling to the backrest portions 106b, 108b are performed by the respective first members 1 of the angle adjusters Z3 and Z4, and Z5 and Z6, respectively. The second members 2 (brackets 72) of the angle adjusters Z3 and Z4, and Z5 and Z6 are respectively coupled to the right head support portion 110 and the left head support portion 112. As a result, the right head support portion 110 and the left head support portion 112 can pivot as shown in arrows A and B and be positioned at a desired angle.

Hereinabove, the embodiment of the angle adjuster according to the first and second present inventions has been described with reference to Figure 1 to Figure 11. However, the first and second present inventions are not limited thereto, and a person skilled in the art will understand that other modifications and improvements may be obtained without departing from the spirit and teachings described in claims, specification, and the like.

### Reference Signs List

- 1: first member
- 2: second member
- 3: shaft member
- 4: gear part
- 5, 5a, 5b: window portion
- 6: floating wedge member
- 7: tooth surface
- 8: first wedge surface
- 9: abutting surface
- 10: gear groove
- 13, 13a, 13b: facing plate part
- 16: disk plate (flat disk plate)
- 17: mounting part
- 20: threaded groove
- 21: cutout portion
21a spring housing portion
21b floating wedge support portion
- 22: second wedge surface
- 23: through hole
- 24, 24a, 24b: circular support opening
- 25, 25a, 25b: first frame portion
- 26, 26a, 26b: second frame portion
- 27: spring member
- 28: stepped portion
- 29: smooth surface
- 31: thread
- 32: flange portion
- 33: through hole
- 42: rivet
- 43: rivet
- 51: washer
- 52: through hole
- 53, 53a, 53b: circular projection
- 54, 54a, 54b: through hole
- 55: through hole
- 60: through hole
- 62: thread
- 64: washer
- 66: washer
- 68: bolt
- 72: bracket
- 74: through hole
- 75: supporting plate portion
- 76: elliptical through hole
- 78: through hole
- 80: rivet
- 100: sofa
- 102: base portion
- 104: right armrest portion
- 105: left armrest portion
- 106: right chair portion
106a seat portion
106b backrest portion
- 108: left chair portion
108a seat portion
108b backrest portion
- 110: right head support portion
- 112: left head support portion
- Z1 to Z8: angle adjuster

## Claims

1. An angle adjuster having a first member and a second member that performs pivoting rotation relative to the first member and is locked at a predetermined angle, the angle adjuster comprising:
a pair of facing plate parts that is provided on one end side of the first member, respectively has circular support openings extending in a thickness direction, and faces each other with a gap interposed in the thickness direction;
a gear part provided in the gap sandwiched between the pair of facing plate parts, the gear part being a flat plate disk body having, at a rotation center, a through hole provided with threaded grooves extending on an inner wall thereof in the thickness direction and a tooth surface provided on an outer circumferential edge portion thereof;
a shaft member as a cylindrical member extending in the thickness direction, the cylindrical member rotating in cooperation with the pivoting rotation of the second member and having threads on an outer surface thereof that fit with the threaded grooves on the inner wall of the through hole of the gear part when being inserted into the through hole of the gear part, the shaft member having a shape allowing sliding rotation by the threads abutting against inner walls of the circular support openings of the pair of facing plate parts when being inserted into the circular support openings of the pair of facing plate parts and both sides of the cylindrical member being borne by the circular support openings; and
a floating wedge member that has a tooth surface formed on one surface side and being capable of engaging with the tooth surface of the outer circumferential edge portion of the gear part and an abutting surface formed on an opposite surface side and abutting against a wedge surface formed on a side of the first member.

2. The angle adjuster according to claim 1, wherein
the threads provided on the outer surface of the shaft member individually include an abutting portion and a root portion, the abutting portion forming a circular arc cross section allowing sliding rotation by a vicinity of an apex in a radial cross section of the shaft member abutting against the respective inner walls of the circular support openings of the pair of facing plate parts, the root portion being continuous with the abutting portion and fitting with the threaded grooves on the inner wall of the through hole of the gear part.

3. The angle adjuster according to claim 2, wherein,
each of the circular support openings of the pair of facing plate parts is a through hole provided in the thickness direction, the through hole having an inner diameter that is substantially the same as an outer diameter of the shaft member and having an inner wall formed as a smooth surface.

4. The angle adjuster according to claim **2,** wherein
the shaft member is a member separate from the second member,
the second member is provided with a through hole centered on a pivoting rotation axis of the second member, and
the through hole is provided with threaded grooves on an inner wall thereof, the threaded grooves fitting with the root portions of the threads provided on the outer surface of the shaft member when the shaft member is inserted.

5. An angle adjuster having a first member and a second member that performs pivoting rotation relative to the first member and is locked at a predetermined angle, wherein
the first member is formed of
a pair of facing plate parts that is provided on one end side of the first member, respectively has circular support openings in a thickness direction, and faces each other with a gap interposed in the thickness direction, and
a flat plate-shaped mounting part coupled between the pair of facing plate parts on an opposite end side thereof,
the first member further includes:
a gear part provided in the gap sandwiched between the pair of facing plate parts, the gear part being a disk body having, at a rotation center, a through hole provided with threaded grooves in the thickness direction on an inner wall thereof and a tooth surface provided on an outer circumferential edge portion thereof;
a floating wedge member that has a tooth surface formed on one surface side and being capable of engaging with the tooth surface of the outer circumferential edge portion of the gear part and an abutting surface formed on an opposite surface side and abutting against a wedge surface formed on a side of the first member; and
a cylindrical shaft member extending in the thickness direction, the cylindrical shaft member rotating in cooperation with the pivoting rotation of the second member and having, on an outer surface thereof, threads that fit with the threaded grooves on the inner wall of the through hole of the gear part when being inserted into the through hole of the gear part,
the pair of facing plate parts has first wedge support surfaces, respectively, that support both sides in the thickness direction of the abutting surface of the floating wedge member, and has window portions, respectively, that form, between the first wedge support surfaces and the gear part, a wedge-shaped space as a movement space for the floating wedge member,
the pair of facing plate parts individually has two or more projections and a through hole, the two or more projections being separated in the width direction toward the opposite end side compared with the individual window portion and projecting inward in the thickness direction, the through hole being provided further toward the opposite end side, and
the mounting part has through holes respectively receiving the two or more projections provided in each of the pair of facing plate parts, and a through hole into which a fastener is inserted integrally with the respective through holes of the pair of facing plate parts.

6. The angle adjuster according to claim 5, wherein
the projections provided on the opposite end side relative to the window portion of each of the pair of facing plate parts are aligned with each other in the width direction, the projections provided being two, and the through holes of the mounting part respectively receiving the projections are aligned with each other in the width direction, the through holes of the mounting part provided being two, and
the through hole of each of the pair of facing plate parts provided on the opposite end side compared with the projections is one, and the through hole of the mounting part into which the fastener is inserted integrally with the respective through holes of the pair of facing plate parts is one, and a leading end of the fastener is crimped after being inserted to join the pair of facing plate parts and the mounting part to each other.

7. The angle adjuster according to claim 5 or 6, wherein
each of the pair of facing plate parts has a frame portion that erects inward in the thickness direction along a peripheral edge portion on one end side of the facing plate part, and when the pair of facing plate parts is coupled to the mounting part with interposing the gear part, the frame portions face each other in the thickness direction to abut or be adjacent to each other.

8. The angle adjuster according to any one of claims 5 to 7, wherein
the mounting part of the first member is provided with a cutout portion on the one end side, the cutout portion has a second wedge support surface supporting a center side in the thickness direction of the abutting surface of the floating wedge member and being continuous with the first wedge support surface.

9. The angle adjuster according to claim 8, wherein
the cutout portion is formed of a floating wedge support portion and a spring housing portion, the floating wedge support portion having the second wedge support surface supporting the center side in the thickness direction of the abutting surface of the floating wedge member, the spring housing portion being cut out further toward the opposite end side compared with the floating wedge support portion and housing a spring member that biases the opposite surface side of the floating wedge member.
